# EUROPEAN PATENT SPECIFICATION

(11) **EP 0 967 771 B1**
(45) Date of publication and mention of the grant of the patent: **07.02.2007**
(21) Application number: 99112374.6
(22) Date of filing: 28.06.1999
(51) Int. Cl.: H04M 1/02, H04B 1/38

(54) **Sim card terminal**
Endgerät mit einer SIM-Karte
Terminal avec une carte SIM

(30) Priority: 27.06.1998 KR 9824602
(43) Date of publication of application: 29.12.1999
(73) Proprietor: SAMSUNG ELECTRONICS CO., LTD., Suwon-City, Kyungki-do (KR)
(72) Inventor: An, Seong-Hyuk, Kumi-shi, Kyongsangbuk-do (KR)
(74) Representative: Grünecker, Kinkeldey, Stockmair & Schwanhäusser Anwaltssozietät

(56) References cited:
- EP-A- 0 599 244
- EP-A- 0 784 383
- WO-A-98/13905

## Description

The present invention relates to a terminal like a portable telephone, and more particularly, to a terminal to which a SIM (Subscriber Identity Module) card can be attached and which has a battery pack built in.

Three general digital cellular systems are GSM (Global System for Mobile) being a European TDMA (Time Division Multiple Access) system, NA-TDMA (North American TDMA), and CDMA (Code Division Multiple Access).

GSM is an international standard for offering compatibility throughout diverse telecommunications networks and has been implemented in Europe and countries in other continents.

A terminal in the GSM system includes a SIM card. The SIM card has almost all subscriber-related information needed for operating the terminal, especially data such as a telephone number and a network number as well as subscriber information like subscriber ID.

SIM cards are divided into a post stamp type (as for instance disclosed in U.S. 5,320,552) and a credit card type. The post stamp type SIM card is detachably inserted into a SIM card contact device after a battery pack is removed from a body, and then the SIM card contact device is mounted onto the terminal body.

The conventional SIM cards, regardless of their types, exhibit the shortcoming that they occupy a large area, thereby placing an obstacle to the developmental trend of terminals toward lightweight and small size.

In the case of the post stamp type, a SIM card reader is installed on a main PCB (Printed Circuit Board) of a body and the SIM card is electrically connected to the SIM card reader by means of a separately procured SIM card contact device. Therefore, the SIM card reader and contact device occupy a large area on the body, limiting the miniaturization of the body and decreasing product competitiveness.

The credit card type is to be pushed between a body and a battery pack for use, decreasing contact reliability of a product and incurring an inconvenience to a user.

EP 0 784 383 A2 discloses a portable telephone having a chip card reader. Further, an adapter is provided in a removable casing which contains a battery. The adapter makes it possible to insert and read a chip card of the micro-SIM format.

EP 0 599 244 A2 describes a portable electronic device such as a portable phone, having an IC card reader-writer integrated with a battery pack.

WO 98/13905 A1 discloses an electronic module connector having a rotatable cover. The electrical connector is for receiving a SIM.

To overcome the above discussed disadvantages, it is the object of the invention to provide a terminal and a battery pack which can contribute to miniaturization of the terminal body.

This object is solved by the subject matters of the independent claims.

Preferred embodiments are defined by the dependent claims.

Accordingly, there is provided a SIM card in a terminal using a battery. In the terminal, a terminal body has a main PCB, an interface connector connected to the main PCB, and at least a pair of first SIM card connecting terminals and a charging terminal which are integrally formed with the interface connector and exposed from a body base. A battery pack is detachably mounted on the base of the terminal body, a SIM card reader is built in the battery pack, a SIM card contact device is fixed to the SIM card reader and has a cover and a plurality of terminals connected to the SIM card reader, for holding a SIM card, the post stamp type SIM card is slidably inserted under the cover of the SIM card contact device, and at least a pair of second SIM card connecting terminals are electrically connected to the SIM card reader and exposed at the positions corresponding to the first SIM card connecting terminals on a base of the battery pack, for electrically connecting the SIM card in the battery pack to the main PCB of the terminal body.

The invention will become more apparent by describing in detail a preferred embodiment thereof with reference to the attached drawings in which:
FIG. 1 is an outward perspective view of a terminal body with a battery pack removed therefrom according to a preferred embodiment of the present invention;
FIG. 2 is an outward perspective view of the battery pack detachable from the terminal body according to the preferred embodiment of the present invention; and
FIG. 3 is a plan view of the battery pack shown in FIG. 2.

A preferred embodiment of the present invention will be described in detail referring to the attached drawings. Like reference numerals denote the same components in the drawings. It is to be noted that a detailed description of a known function or structure of the present invention will be omitted if it is deemed to obscure the subject matter of the present invention.

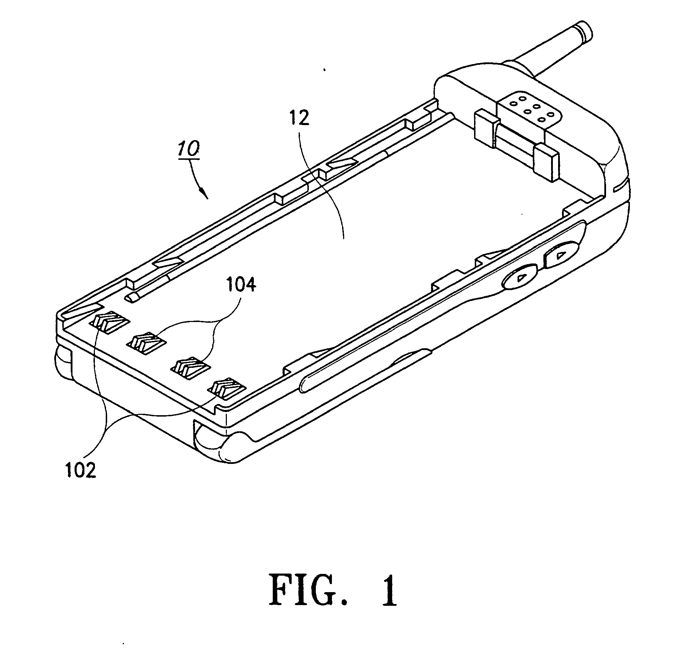

Referring to FIG. 1, charging terminals 102 for receiving a power voltage from a battery pack are symmetrically exposed from a base 12 in a terminal body with the battery pack removed therefrom. The charging terminals 102 are connected to an interface connector (not shown) electrically linked to a main PCB of the body 10. Charging terminals connected to battery cells are exposed at the positions corresponding to the charging terminals 102 on a base of the battery pack.

First SIM card connecting terminals 104 are integrally formed with the interface connector of the charging terminals 102, between the charging terminals 102. That is, the first SIM card connecting terminals 104 are electrically coupled to the main PCB of the body 10.

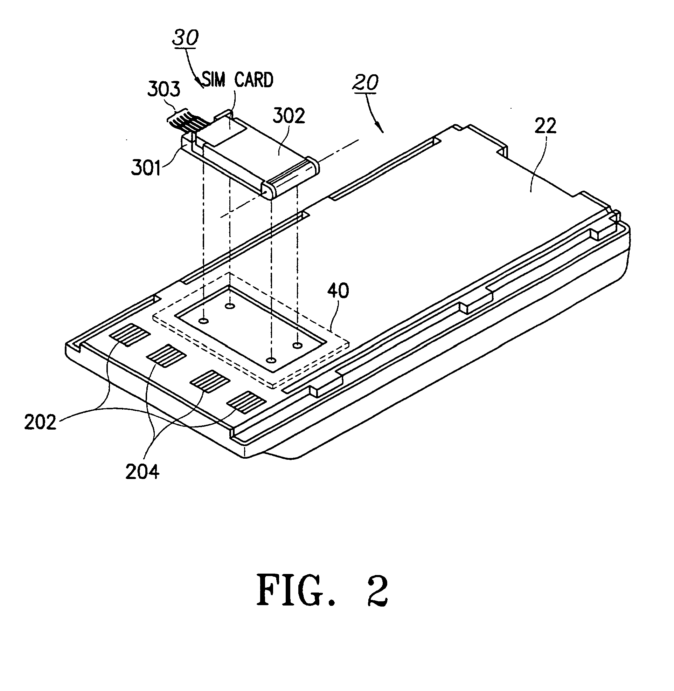

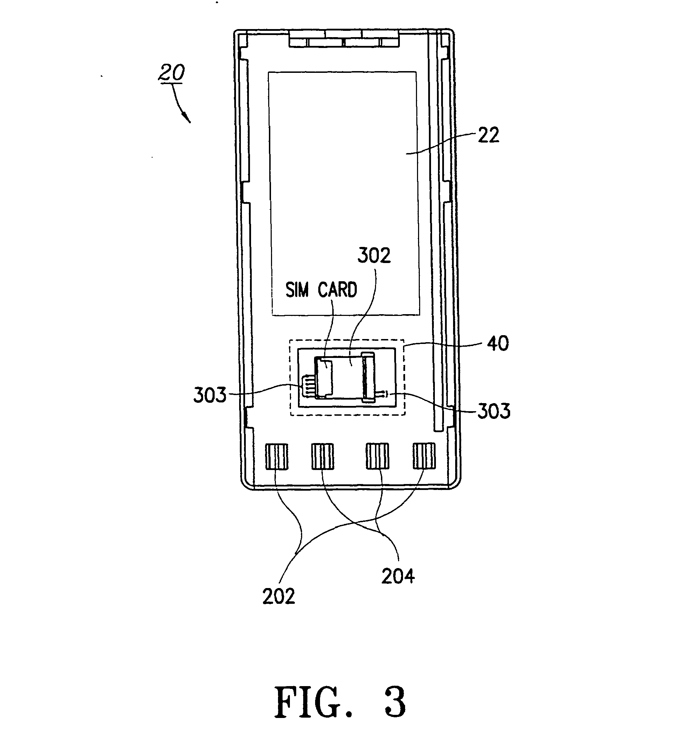

As shown in FIGs. 2 and 3, a battery pack 20 of the present invention is detachable from the terminal body 10. The battery pack 20 includes battery cells and a SIM card reader 40 in a lower portion of the battery pack 20, for reading and writing a SIM card. The battery cells function as a power supply.

The SIM card for subscriber identification is comprised of a power receiver, a memory for reading and writing data, a ground, and a dummy. A SIM card contact device 30 is fixedly connected to the SIM card reader 40 and includes a housing 301, a cover 302, a hinge, and a plurality of terminals 303. The SIM card can be freely detached from the SIM card contact device 30. The SIM card contact device 30 is mechanically fixed on the SIM card reader 40 not to protrude upward with respect to the surface of the base 22, by inserting protrusions (not shown) formed at the four corners of the SIM card contact device 30 into holes of the SIM card reader 40 and soldering the terminals 303 onto the SIM card reader 40.

From the battery pack base 22 are exposed second SIM card connecting terminals 204 corresponding to the first SIM card connecting terminals 104 of FIG. 1. The second SIM card connecting terminals 204 are electrically connected to the SIM card reader 40.

Reference numeral 202 denotes charging terminals. The second SIM card connecting terminals 204 may be disposed independently from the charging terminals 202 and can be soldered to the SIM card reader 40.

The SIM card is inserted under the SIM card cover 302, the cover 302 rotates upon the hinge to be held in the housing 301, and then the cover 302 slidably moves to be locked into the housing 301. Thus, the SIM card is fixedly held in the housing 301.

To remove the SIM card from the housing 301, the above procedure is performed in a reverse order. That is, the cover 302 rotates upward from the housing 301, the SIM card is removed, and then the cover 302 is locked into the housing 301.

The battery pack 20 of the present invention includes the battery cells, a protection circuit, the SIM card, the SIM card contact device, and the SIM card reader 40.

If the protection circuit is present to protect the battery cells of the battery pack 20 against excess heat, it is preferable to integrate the protection circuit with the SIM card reader 40 and fix the SIM card contact device 30 to the SIM card reader 40.

When the battery pack is mounted on the terminal body, the main PCB of the body is electrically connected to a PCB connected to the SIM card reader of the battery pack. That is, the main PCB of the body is connected to the SIM card reader sequentially via the SIM card connecting terminals of the terminal body base and the SIM card connecting terminals of the battery pack. As a result, the SIM card is electrically connected to the main PCB.

While the SIM card is a post stamp type detachable from the battery pack in the embodiment of the present invention, it can be integrated with the battery pack. Alternatively, the SIM card and the SIM card reader can be embodied as a module type or an IC type to be fixedly incorporated.

In accordance with the present invention as described above, the SIM card for subscriber identification is detachably incorporated in the battery pack so that the area for the SIM card, SIM card contact device, and SIM card reader on the body is decreased, contributing to the miniaturization of the body. The same effects can be obtained by configuring the SIM card and the SIM card reader as a module type or an IC type built in the battery pack. Further, the SIM card of the present invention offers the advantage of user convenience.

## Claims

1. A terminal comprising
a terminal body (10); and
a battery pack (20) detachably mounted on a base (12) of the terminal body, said battery pack (20) comprising means (30, 40) for holding a card,
wherein said means for holding said card comprises a card reader (40) and a card contact device (30) fixed to said card reader,
**characterized in that**
said card is a SIM card, said card reader is a SIM card reader and said card contact device is a SIM card contact device, and
said SIM card contact device (30) comprises a cover (302) and a housing (301) which are connected with each other by a hinge, wherein said SIM card is slidably insertable under said cover.

2. The terminal according to claim 1, wherein said SIM card is a micro-SIM card.

3. The terminal according to claim 1 or 2, further comprising a protection circuit for protecting the battery pack against excess heat, said protection circuit being integrated with said SIM card reader (40).

4. The terminal according to one of claims 1 to 3, wherein said terminal body (10) has a main PCB and a pair of first SIM card connecting terminals (104); and said battery pack (20) has a pair of second SIM card connecting terminals (204) at positions corresponding to the first SIM card connecting terminals.

5. A battery pack arranged for being detachably mounted on a base (12) of a terminal body (10) of a terminal, the battery pack comprising means (30, 40) for holding a card, said means for holding a card comprising a card reader (40) and a card contact device (30) fixed to said card reader,
**characterized in that**
said card is a SIM card, said card reader is a SIM card reader and said card contact device is a SIM card contact device, and
said SIM card contact device (30) comprises a cover (302) and a housing (301) which are connected with each other by a hinge, wherein said SIM card is slidably insertable under said cover.

6. The battery pack according to claim 5, wherein said SIM card is a micro-SIM card.

7. The battery pack according to claim 5 or 6, further comprising a protection circuit for protecting the battery pack against excess heat, said protection circuit being integrated with said SIM card reader (40).

8. The battery pack according to one of claims 5 to 7, further comprising a pair of SIM card connecting terminals (204) at positions corresponding to SIM card connecting terminals (104) of said terminal body.

## Patentansprüche

1. Ein Daten-Endgerät, mit
einem Endgerät-Körper (10); und
einem Akkumulator-Block (20), der an einer Basis (12) des Endgerät-Körpers abnehmbar montiert ist, wobei der Akkumulator-Block (20) Mittel (30, 40) zum Halten einer Karte aufweist,
worin das Mittel zum Halten der Karte einen Karten-Leser (40) und eine Karten-Kontaktvorrichtung (30) umfasst, die an dem Karten-Leser fixiert ist,
**dadurch gekennzeichnet, dass**
die Karte eine SIM-Karte ist, dass der Karten-Leser ein SIM-Karten-Leser ist, und dass die Karten-Kontaktvorrichtung eine SIM-Karten-Kontaktvorrichtung ist, und
die SIM-Karten-Kontaktvorrichtung (30) eine Abdeckung (302) und ein Gehäuse (301) umfasst, welche miteinander durch ein Scharnier verbunden sind, worin die SIM-Karte unter die Abdeckung gleitend einsetzbar ist.

2. Daten-Endgerät gemäß Anspruch 1, **dadurch gekennzeichnet, dass** die SIM-Karte eine Mikro-SIM-Karte ist.

3. Daten-Endgerät gemäß Anspruch 1 oder 2, weiterhin **gekennzeichnet durch** einen Schutzschaltkreis zum Schützen des Akkumulator-Blocks gegen exzessive Wärme, wobei der Schutzschaltkreis mit dem SIM-Karten-Leser (40) integriert ist.

4. Daten-Endgerät gemäß einem der Ansprüche 1 bis 3, **dadurch gekennzeichnet, dass** der Endgerät-Körper (10) eine Hauptleiterplatte PCB und ein Paar erster SIM-Karten-Verbindungsanschlüsse (104) hat, und dass der Akkumulator-Block (20) ein Paar zweiter SIM-Karten-Verbindungsanschlüsse (204) an Positionen aufweist, die mit denen der ersten SIM-Karten-Verbindungsanschlüsse korrespondieren.

5. Akkumulator-Block zur abnehmbaren Montage an einer Basis (12) eines Daten-Endgerät-Körpers (10) eines Daten-Endgeräts, wobei der Akkumulator-Block Mittel (30, 40) zum Festhalten einer Karte aufweist, welche Mittel zum Festhalten einer Karte einen Karten-Leser und eine an dem Karten-Leser fixierte Karten-Kontaktvorrichtung (30) aufweisen,
**dadurch gekennzeichnet, dass** die Karte eine SIM-Karte ist, dass der Karten-Leser ein SIM-Karten-Leser ist, und dass die Karten-Kontaktvorrichtung eine SIM-Karten-Kontaktvorrichtung ist, und
die SIM-Karten-Kontaktvorrichtung (30) eine Abdeckung (302) und ein Gehäuse (301) umfasst, welche miteinander durch ein Scharnier verbunden sind, worin die SIM-Karte unter die Abdeckung verschiebbar einsetzbar ist.

6. Akkumulator-Block gemäß Anspruch 5, **dadurch gekennzeichnet, dass** die SIM-Karte eine Mikro-SIM-Karte ist.

7. Akkumulator-Block gemäß Anspruch 5 oder 6, weiterhin **gekennzeichnet durch** einen Schutzschaltkreis zum Schützen des Akkumulator-Blocks gegen exzessive Wärme, wobei der Schutz-Schaltkreis mit dem SIM-Karten-Leser (40) integriert ist.

8. Akkumulator-Block gemäß einem der Ansprüche 5 bis 7, weiterhin **gekennzeichnet durch** ein Paar SIM-Karten-Verbindungsanschlüsse (204) an Positionen, korrespondierend mit SIM-Karten-Verbindungsanschlüssen (104) des Daten-Endgerät-Körpers.

## Revendications

1. Terminal comprenant :
un corps de terminal (10) ; et
une unité de batterie (20) montée de manière amovible sur une base (12) du corps de terminal, ladite unité de batterie (20) comprenant un moyen (30, 40) destiné à recevoir une carte,
dans lequel ledit moyen destiné à recevoir ladite carte comprend un lecteur de carte (40) et un dispositif de mise en contact de carte (30) fixé sur ledit lecteur de carte,
**caractérisé en ce que**
ladite carte est une carte SIM, ledit lecteur de carte est un lecteur de carte SIM et ledit dispositif de mise en contact de carte est un dispositif de mise en contact de carte SIM, et
ledit dispositif de mise en contact de carte SIM (30) comprend un couvercle (302) et un boîtier (301) qui sont reliés entre eux par une charnière, ladite carte SIM pouvant être insérée par glissement au-dessous dudit couvercle.

2. Terminal selon la revendication 1, dans lequel ladite carte SIM est une microcarte SIM.

3. Terminal selon la revendication 1 ou 2, comprenant en outre un circuit de protection, destiné à protéger l'unité de batterie contre une chaleur excessive, ledit circuit de protection étant intégré dans ledit lecteur de carte SIM (40).

4. Terminal selon l'une des revendications 1 à 3, dans lequel ledit corps de terminal (10) possède une carte de circuits imprimés principale et une paire de premières bornes de connexion de carte SIM (104) ; et
ladite unité de batterie (20) possède une paire de secondes bornes de connexion de carte SIM (204), dans des positions correspondant aux premières bornes de connexion de carte SIM.

5. Unité de batterie conçue pour être montée de manière amovible sur une base (12) d'un corps de terminal (10) d'un terminal, l'unité de batterie comprenant un moyen (30, 40) destiné à recevoir une carte, ledit moyen destiné à recevoir ladite carte comprenant un lecteur de carte (40) et un dispositif de mise en contact de carte (30) fixé sur ledit lecteur de carte,
**caractérisé en ce que**
ladite carte est une carte SIM, ledit lecteur de carte
est un lecteur de carte SIM et ledit dispositif de mise en contact de carte est un dispositif de mise en contact de carte SIM, et
ledit dispositif de mise en contact de carte SIM (30) comprend un couvercle (302) et un boîtier (301) qui sont reliés entre eux par une charnière, ladite carte SIM pouvant être insérée par glissement au-dessous dudit couvercle.

6. Unité de batterie selon la revendication 5, dans laquelle ladite carte SIM est une microcarte SIM.

7. Unité de batterie selon la revendication 5 ou 6, comprenant en outre un circuit de protection, destiné à protéger l'unité de batterie contre une chaleur excessive, ledit circuit de protection étant intégré dans ledit lecteur de carte SIM (40).

8. Unité de batterie selon l'une des revendications 5 à 7, comprenant en outre une paire de bornes de connexion de carte SIM (204), dans des positions correspondant aux bornes de connexion de carte SIM (104) dudit corps de terminal.
